# EUROPEAN PATENT APPLICATION

(11) **EP 4 786 829 A1**
(43) Date of publication of application: **05.08.2026**
(21) Application number: 25155278.2
(22) Date of filing: 31.01.2025
(51) Int. Cl.: F16K 1/52, F16K 17/04, F16K 24/04, F16K 27/02, F16K 27/12, H01M 50/333

(54) **EMERGENCY DEGASSING UNIT FOR DEGASSING BATTERY HOUSING AND BATTERY HOUSING**

(71) Applicant: MANN+HUMMEL GmbH, 71636 Ludwigsburg (DE)
(72) Inventor: DVORAK, Milan, 71636 Ludwigsburg (DE)
(74) Representative: Mann + Hummel Intellectual Property

(57) **Abstract**

An emergency degassing unit (100) for degassing a battery housing, in particular a battery housing of a traction battery of a motor vehicle, the emergency degassing unit comprising a base body (10) and a valve unit (30) comprising a flexible valve keeper (32) and a closure element (34), the valve keeper being mounted with a mechanical preload force in an axial direction (16) to the base body, the closure element being configured to be in a closed position if a force acting on the closure element that is generated by a pressure in the battery housing is lower than the preload force of the valve keeper, and the closing element being configured to be in an open position if the force acting on the closure element generated by the pressure in the battery housing exceeds the preload force of the valve keeper, the emergency degassing unit further comprising a protective cover (26) arranged in the axial direction above the closure element, the protective cover being configured to limit a movement of the valve keeper in the axial direction when the closure element is in the open position.

## Description

### Technical Field

Embodiments relate to an emergency degassing unit for degassing a battery housing, in particular a battery housing of a traction battery of a motor vehicle, as well as a battery housing, in particular of a traction battery of a motor vehicle.

### Background Art

Battery electric storage systems used as stationary systems or as traction batteries for vehicles contain a certain number of battery cells.

In the event of a malfunction of the battery system hot gases and particles may escape from the battery cells. Mostly venting units with semipermeable membranes are used which lead an emergency degassing function by burst through a spike when the gas pressure in the battery housing exceeds a certain limit. So after this event the membrane is not functional anymore. This is mostly suitable for hot degassing where the temperatures exceed 300 °C and battery cells are getting to start thermal runaway.

Reclosable venting units are also known in the art.

DE 10 2021 123 420 A1 e.g. describes an emergency degassing valve comprising a base body for connection to a degassing opening of a room to be degassed, wherein the base body has an emergency degassing opening. Furthermore, a pressure cap is provided to close the emergency degassing opening. The emergency degassing valve is characterized in that a spring device for applying a predetermined force to the pressure cap so that the pressure cap is held in a closed position, wherein the spring device is designed such that when a predetermined internal pressure is reached in the space to be degassed, the spring device releases the pressure cap such that the emergency degassing opening remains open even if a predetermined internal pressure in the space to be degassed is again undershot.

Further, US 2022/0363210 A1 describes a protective device for a housing, such as a battery housing, for discharging an overpressure from the interior of the housing. The protective device has a closure element for sealing an opening in the housing in a first operating state. The closure element is arranged to be movable relative to the housing and is configured to be moved into a second operating state in a non-destructive manner. A bearing element is provided for guiding the closure element. The closure element may have at least in some regions, a membrane having a predetermined permeability, and in the second operating state the closure element uncovers the opening in the housing.

### Summary

It is an object of the embodiments to provide an improved emergency degassing unit for degassing a battery housing, in particular a battery housing of a traction battery of a motor vehicle.

Another object is to provide a battery housing, in particular of a traction battery of a motor vehicle, with an improved emergency degassing unit.

According to an aspect of the embodiments the object is achieved by an emergency degassing unit for degassing a battery housing, in particular a battery housing of a traction battery of a motor vehicle, the emergency degassing unit comprising a base body comprising a front side and an opposing rear side along an axial direction, the base body further comprising a circumferentially extending rim surrounding a passageway for degassing, and the rear side of the base body being configured to be mounted to a degassing opening of the battery housing. The emergency degassing unit further comprises a valve unit comprising a flexible valve keeper and a closure element, the valve keeper surrounding the closure element in a closed position of the closure element, the valve keeper being mounted with a mechanical preload force in the axial direction to the base body, the closure element being configured to be in the closed position if a force acting on the closure element that is generated by a pressure in the battery housing is lower than the preload force of the valve keeper, and the closure element being configured to be in an open position if the force acting on the closure element generated by a pressure in the battery housing exceeds the preload force of the valve keeper. The emergency degassing unit further comprises a protective cover arranged in the axial direction above the closure element and configured to limit a movement of the valve keeper in axial direction 16 when the closure element is in the open position.

According to a further aspect of the embodiments the another object is achieved by a battery housing, in particular of a traction battery of a motor vehicle, the battery housing comprising the emergency degassing unit, and the degassing opening. The emergency degassing unit is mounted at the degassing opening and is configured to open the passageway when the pressure in the battery housing exceeds a threshold value and to close the passageway when the pressure is below the threshold value.

Advantageous embodiments are described in the dependent claims, the description and the drawings.

The proposed emergency degassing unit comprises a reclosable low pressure valve unit which is mounted to the base body. On the base body a protective cover is fixed which has two main functions. The first function is the support and limit for the valve movement. The maximum elongation for opening the valve is given by the distance of the protective cover from the valve itself. The second function is the protection of the valve from the outside against high pressure water jet cleaning or any harmful objects.

The degassing unit can use thread inserts, bayonet or snap fits for fixation to the battery wall and may be sealed by any shape gasket or O-ring.

The valve unit comprises the flat sheet metal valve keeper, e.g. from stainless steel with a thickness of 0.5 mm, which has a specific shaped geometry with flexible function for low opening pressure. The valve keeper may be fixed to the base body by two plastic pins. The valve unit further comprises a silicone elastomer overmoulding, e.g. vinyl methyl quartz (VMQ), as the closure element which is connected to the valve keeper and which ensures a proper tightness against a valve seat on the base body. The tightness is generated by a preload force of the valve keeper. The valve may be arranged with a pretension of the flat sheet metal valve keeper at the end of folding edges for a constant pressing of the closure element to the valve seat.

This reclosable valve fulfils two main functions, first to release a dangerous gas overpressure from the battery housing within a short time, and second to protect the battery system against the water ingress.

The opening pressure is maintained by the design of valve itself, because the flat sheet metal of the valve keeper is cut to a specific shape which does have a good flexibility in order to be opened already by a low overpressure inside the battery housing. The gas overpressure is pushing against the free surface of the elastomer overmoulding from the inside. Then the force generated by the pressure is transferred through flexible arms of the valve keeper to the point of fixation at the base body and the valve is being opened immediately by the closure element moving towards the protective cover. If the overpressure is released, the closure element is released, and the valve is closed again.

The water leakage resistance is reached by deformation of the elastomer overmoulding due to the necessary force generated by predeformation of the sheet metal of the valve keeper.

Favorably, the inventive solution allows for a low pressure valve with the limits for a necessary opening pressure significantly reduced. The reclosable valve may start to open by an overpressure of approximately 20 mbar. If the gas overpressure is released from the beginning, the internal components of the battery housing are not loaded anymore by the gas and a failed cell may easily be detected.

The emergency degassing unit may exhibit low production costs as well.

According to a favorable embodiment of the emergency degassing unit, the valve unit may further comprise a ring element integral to the valve keeper and being overmoulded with an elastomer overmould, in particular with a silicone elastomer overmould, in particular a vinyl methyl quartz, as the closure element. Thus, a reliable connection between the valve keeper and the closure element may be achieved.

According to a favorable embodiment of the emergency degassing unit, the valve unit may further comprise one or more tie rods for interlocking between the valve keeper and the elastomer overmould. Unique connection between the sheet metal valve keeper and the elastomer overmoulding may be achieved by a usage of specific tie rods in order to not be bound on adhesion between metal and elastomer only.

According to a favorable embodiment of the emergency degassing unit, the closure element may have a concave shape viewed from the cover. Thus, the shape of the closure element may be maintained even with higher pressure from inside the battery housing.

According to a favorable embodiment of the emergency degassing unit, the valve keeper may be a flat sheet metal, in particular stainless steel. Advantageously, the required flexibility of the valve keeper may be achieved.

According to a favorable embodiment of the emergency degassing unit, the valve unit may further comprise at least two pins integral with the base body, the valve keeper being fixed to the base body by the at least two pins, in particular plastic pins. The valve keeper may be welded to the base body by the two plastic pins, thus being reliably fixed to the base body.

According to a favorable embodiment of the emergency degassing unit, the valve keeper may comprise predeformed folded edges. Advantageously, tightness of the reclosable valve to the inlet opening may be achieved.

According to a favorable embodiment, the emergency degassing unit may further comprise mounting elements and a sealing element configured to mount the rear side of the base body in a substantially fluid tight manner to the degassing opening of the battery housing. Convenient and tight fixation of the emergency degassing unit to the battery housing may be ensured by this way.

According to a favorable embodiment of the emergency degassing unit, the mounting elements may comprise one among thread inserts, a bayonet, snap fits configured to be fixed to a wall of the battery housing. Convenient and tight fixation of the emergency degassing unit to the battery housing may be ensured by this way.

According to a favorable embodiment of the emergency degassing unit, the sealing element may be a shape gasket or an O-ring. The base body may be sealed in a reliable manner to the battery housing.

Reliable degassing of an overpressure inside the battery housing is achieved by the emergency degassing unit even for low overpressure values. If the gas causing the overpressure is vented and a normal pressure inside the battery housing is established again the reclosable valve of the emergency degassing unit closes again for further functioning of the battery.

### Brief Description of Drawings

The embodiments together with the above-mentioned and other objects and advantages may best be understood from the following detailed description of the embodiments, but not restricted to the embodiments.
Fig. 1 shows an emergency degassing unit for degassing a battery housing, in particular a battery housing of a traction battery of a motor vehicle, according to embodiments, in an isometric view from a front side.
Fig. 2 shows the emergency degassing unit according to Fig. 1 from a rear side.
Fig. 3 is an exploded view of the emergency degassing unit according to Fig. 1.
Fig. 4 is .an inside view of the emergency degassing unit in a closed position of the closure element.
Fig. 5 is a sectional view of the emergency degassing unit in the closed position of the closure element.
Fig. 6 is an inside view of the emergency degassing unit in an open position of the closure element.
Fig. 7 is a sectional view of the emergency degassing unit in the open position of the closure element.

### Description of Embodiments

In the drawings, like elements are referred to with equal reference numerals. The drawings are merely schematic representations, not intended to portray specific parameters of the embodiments. Moreover, the drawings are intended to depict only typical embodiments of the embodiments and therefore should not be considered as limiting the scope of the embodiments.

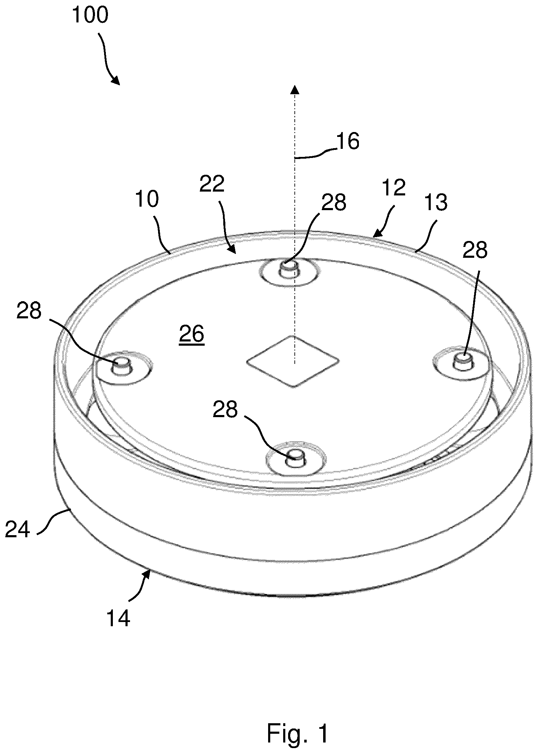

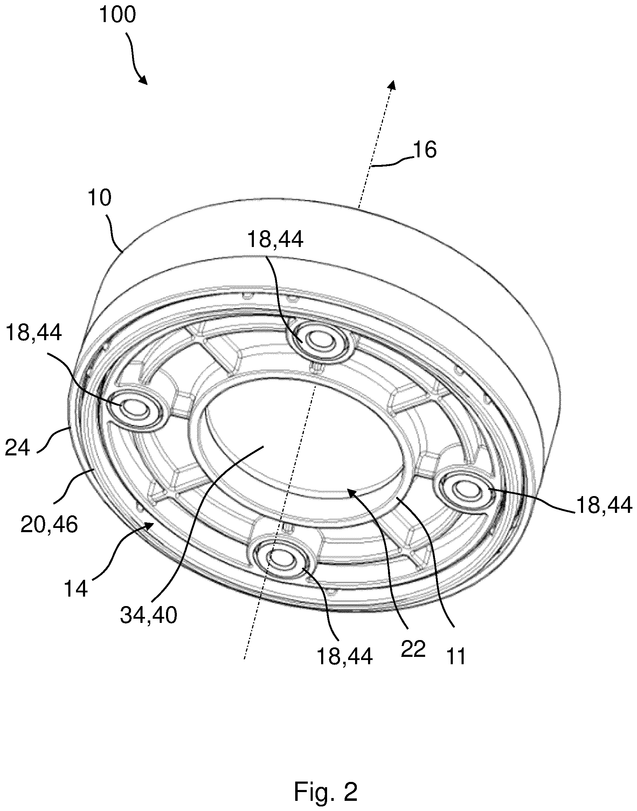

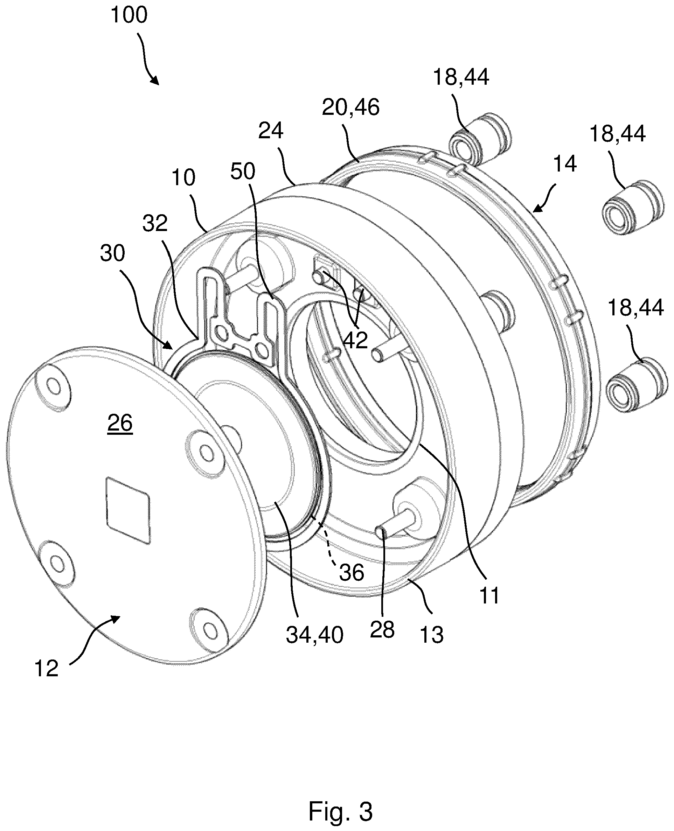

Fig. 1 depicts an emergency degassing unit 100 for degassing a battery housing, in particular a battery housing of a traction battery of a motor vehicle, according to embodiments, in an isometric view from a front side 12. Fig. 2 depicts the emergency degassing unit 100 from a rear side 14, whereas in Fig. 3 an exploded view of the emergency degassing unit 100 is shown.

The emergency degassing unit 100 comprises a base body 10 with a front side 12 and an opposing rear side 14 along an axial direction 16. The base body 10 has a circumferentially extending rim 24 surrounding a passageway 22 for degassing. The base body further comprises a valve unit 30.

The base body 10 as well as the protective cover 26 may be made e.g. from poly propylene (PP) reinforced with glass fibres (GF 30).

The valve unit 30 comprises a flexible valve keeper 32 and a closure element 34. The valve keeper 32 is eccentrically fixed to the base body 10 in order to guarantee its flexibility and is surrounding the closure element 34 in a closed position of the closure element 34.

The valve keeper 32 is mounted with a mechanical preload force in axial direction 16 to the base body 10.

Functioning of the valve unit 30 is defined by the closure element 34 being in a closed position, if a force acting on the closure element 34 generated by a pressure in the battery housing is lower than the preload force of the valve keeper 32, and being in an open position if the force acting on the closure element 34 generated by the pressure in the battery housing exceeds the preload force of the valve keeper 32.

Further, a protective cover 26 is arranged in axial direction above the closure element 34 to limit a movement of the valve keeper 32 in axial direction 16 when the closure element 34 is in the open position.

The base body 10 is configured for being mounted with the rear side 14 to a degassing opening of the battery housing.

The valve unit 30 comprises a ring element 36. The ring element 36 is integral to the valve keeper 32 and is overmoulded with an elastomer overmould 40, in particular with a silicone elastomer overmould, in particular a vinyl methyl quartz, as the closure element 34.

The valve keeper 32 may advantageously be a flat sheet metal, in particular from stainless steel, e.g. with a thickness of 0,5 mm.

The preload force may advantageously be e.g. 50 N, creating a compression force of 2 N on elastomer overmoulding 40 to the valve seat. With a maximum valve stroke of 10 mm for opening the closure element 34 in axial direction 16, an opening pressure of as low as, e.g., 50 mbar at room temperature may be sufficient to open the valve unit 30.

A suitable production process technology of the valve keeper 32 can be cutting, e.g. by laser, water ray samples and stamping for series production, then an overmoulding process by silicone elastomer to specific shape of the closure element 34.

The valve keeper 32 is fixed to the base body 10 by at least two pins 42, in particular plastic pins, being integral with the base body 10.

The base body 10 comprises mounting elements 18 and a sealing element 20 for being mounted with the rear side 14 in a substantially fluid tight manner to the degassing opening of the battery housing. The mounting elements 18 may comprise thread inserts 44, as shown in the Figures, or a bayonet, or snap fits to be fixed to a wall of the battery housing. The sealing element 20 may be a shape gasket 46, as shown in the Figures, or an O-ring.

In Fig. 1, where the emergency degassing unit 100 is shown from the front side 12, the protective cover is be seen being mounted to the base body 10 by four mounting elements 28, e.g. screw bolts. The passageway 22 is the gap surrounding the protective cover 26 between cover 26 and the base body 10.

In Fig. 2, where the emergency degassing unit 100 is shown from the rear side 14, the four mounting elements 18 realized as thread inserts 44 are to be seen together with the surrounding sealing element 20 realized as the shape gasket. The passageway 22 is leading through the inlet opening 11.

In Fig. 3 the specific shape geometry of the valve keeper 32 is to be seen. The valve keeper 32 encloses the closure element 34 and ends in a fixation element 50 for mounting the valve keeper 32 to the base body 10 by the two plastic pins 42.

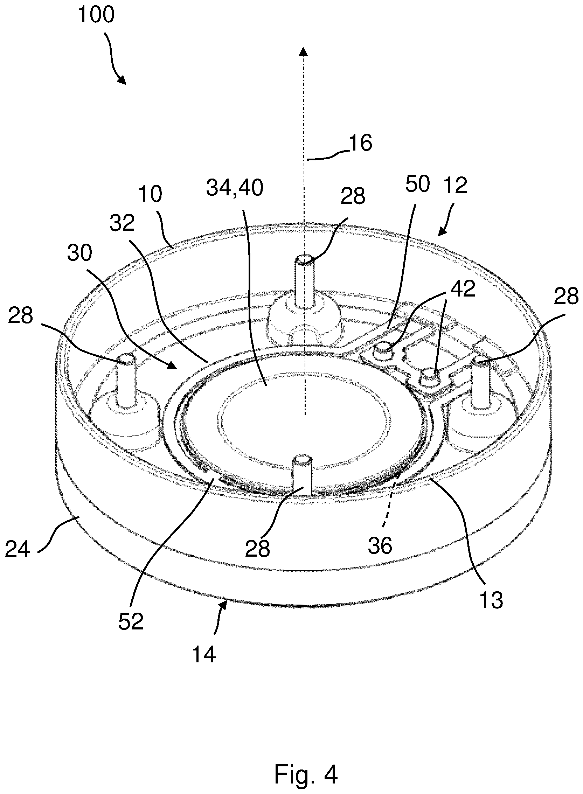

Fig. 4 depicts an inside view of the emergency degassing unit 100 in a closed position of the closure element 34. Mounting of the valve keeper 32 by the fixation element 50 to the base body 10 is achieved by the two plastic pins 42. On the other hand part of the fixation element 50 is to be inserted into the base body 10 for mounting the valve unit 30 with a preload force in order to seal the inlet opening 11 by the closure element 34 when there is normal pressure in the battery housing.

The closure element 34 is connected to the valve keeper 32 by an interconnection element 52 as a connection between the ring element 36 of the closure element 34 and the surrounding valve keeper 32.

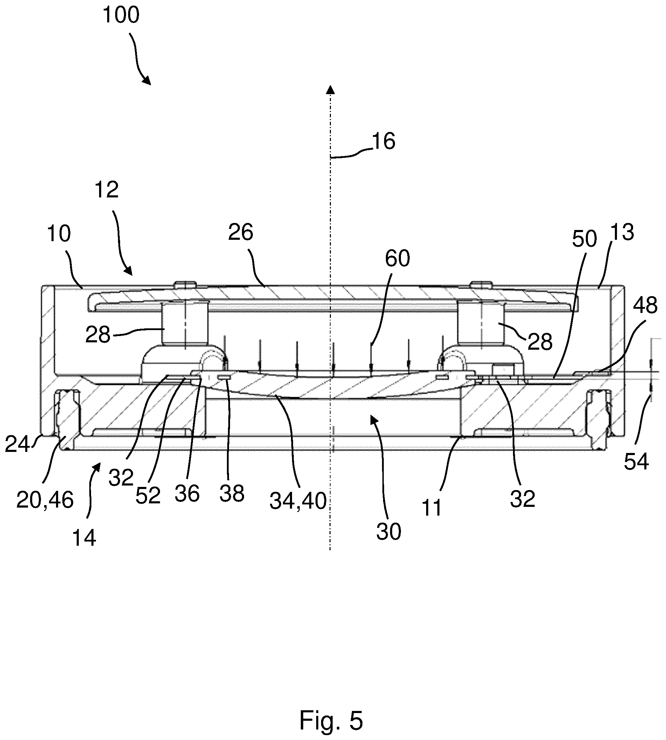

Fig. 5 depicts a sectional view of the emergency degassing unit 100 in the closed position of the closure element 34.

As is to be seen in the sectional view, the valve unit 30 further comprises one or more tie rods 38 for interlocking between the valve keeper 34 and the silicone elastomer overmould 40. The closure element 34 is configured with a concave shape viewed from the cover 26 in order to withstand higher gas pressures from the inlet opening 11.

In the closed state of the valve unit 30 the inside of the battery housing is protected from possible water pressure 60, depicted by arrows, entering water from the outside.

The valve keeper 32 is configured with predeformed folded edges 48 in order to maintain tightness of the elastomer overmoulding 40. Predeformation overlap 54 of the folded edges 48 may be e.g. 1 mm.

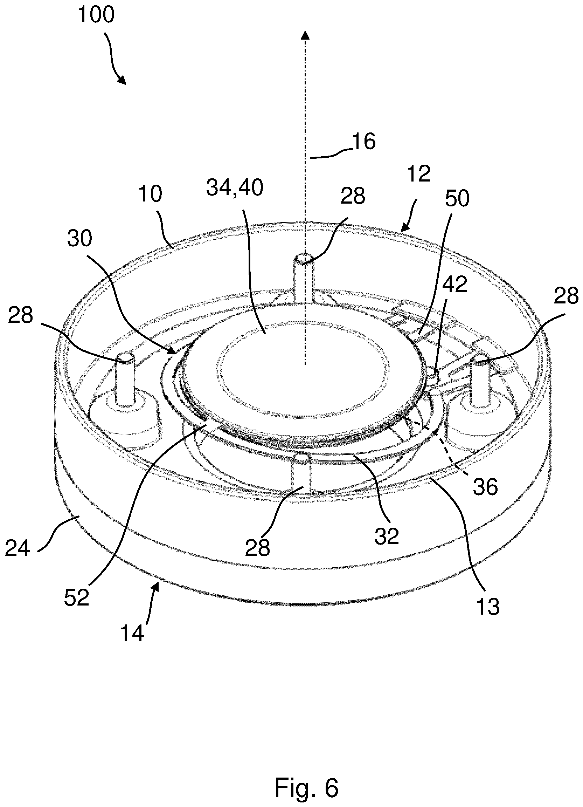

In Fig. 6 an inside view of the emergency degassing unit 100 is depicted in an open position of the closure element 34.

The closure element 34 is elevated being connected to the valve keeper 32 by the interconnection element 52 on one side. The closure element 34 remains in a flat shape. The valve keeper 32 is deformed being mounted eccentrically to the base body 10 at the two plastic pins 42. Thus, the passageway 22 is opened for degassing the battery housing where the base body 10 is mounted to from the rear side 14.

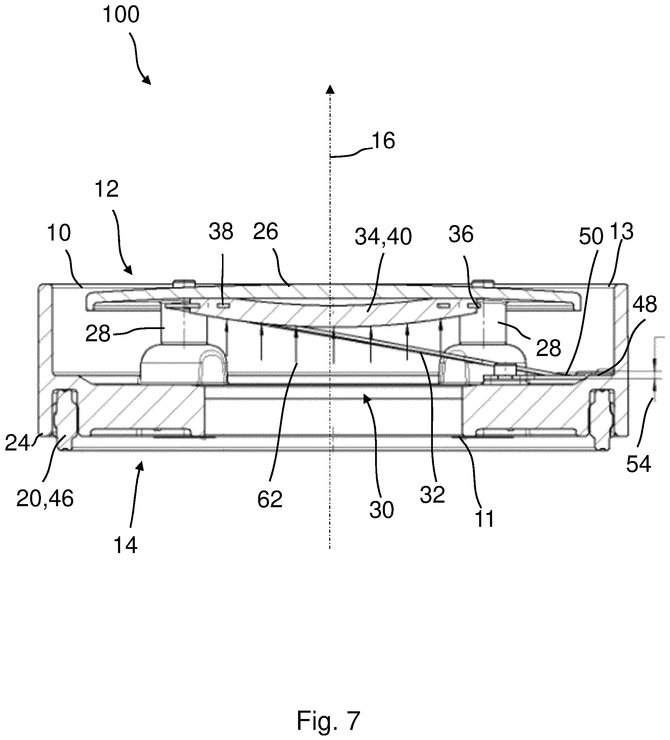

Fig. 7 depicts a sectional view of the emergency degassing unit 100 in the open position of the closure element 34.

The gas overpressure 62 from inside the battery housing is depicted by arrows pressing the closure element 34 against the protective cover 26 which limits the movement of the closure element 34 along the axial direction 16 serving as a stroke for the valve unit 30. Thus the passageway 22 from the inlet opening 11 through the inside of the base body 10 to the outlet opening 13 is opened when a defined pressure in the battery housing exceeds a threshold value and to close the passageway 22 when the pressure is below the threshold value.

### Reference Numbers

- 10: base body
- 11: inlet opening
- 12: front side
- 13: outlet opening
- 14: rear side
- 16: axial direction
- 18: mounting element
- 20: sealing element
- 22: passageway
- 24: rim
- 26: protective cover
- 28: mounting element
- 30: valve unit
- 32: valve keeper
- 34: closure element
- 36: ring element
- 38: tie rod
- 40: silicone elastomer overmould
- 42: plastic pin
- 44: thread insert
- 46: shape gasket
- 48: predeformed folded edge
- 50: fixation element of valve keeper
- 52: interconnection element
- 54: predeformation overlap
- 60: water pressure
- 62: gas overpressure
- 100: emergency degassing unit

## Claims

1. An emergency degassing unit (100) for degassing a battery housing, in particular a battery housing of a traction battery of a motor vehicle, the emergency degassing unit (100) comprising:
a base body (10) comprising a front side (12) and an opposing rear side (14) along an axial direction (16), the base body (10) further comprising a circumferentially extending rim (24) surrounding a passageway (22) for degassing, and the rear side (14) of the base body (10) being configured to be mounted to a degassing opening of the battery housing; and
a valve unit (30) comprising a flexible valve keeper (32) and a closure element (34), the valve keeper (32) surrounding the closure element (34) in a closed position of the closure element (34), the valve keeper (32) being mounted with a mechanical preload force in the axial direction (16) to the base body (10), the closure element (34) being configured to be in the closed position if a force acting on the closure element (34) that is generated by a pressure in the battery housing is lower than the preload force of the valve keeper (32), and the closure element (34) being configured to be in an open position if the force acting on the closure element (34) generated by the pressure in the battery housing exceeds the preload force of the valve keeper (32); and
a protective cover (26) arranged in the axial direction (16) above the closure element (34) and configured to limit a movement of the valve keeper (32) in the axial direction (16) when the closure element (34) is in the open position.

2. The emergency degassing unit according to claim 1, wherein the valve unit (30) further comprises a ring element (36) integral to the valve keeper (32) and being overmoulded with an elastomer overmould (40) as the closure element (34).

3. The emergency degassing unit according to claim 2, wherein the valve unit (30) further comprises one or more tie rods (38) for interlocking between the valve keeper (34) and the elastomer overmould (40).

4. The emergency degassing unit according to any one of preceding claims, wherein the closure element (34) has a concave shape viewed from the cover (26).

5. The emergency degassing unit according to any one of preceding claims, wherein the valve keeper (32) is a flat sheet metal.

6. The emergency degassing unit according to any one of preceding claims, wherein the valve unit (30) further comprises at least two pins (42) integral with the base body (10), the valve keeper (32) being fixed to the base body (10) by the at least two pins (42).

7. The emergency degassing unit according to any one of preceding claims, wherein the valve keeper (32) comprises predeformed folded edges (48).

8. The emergency degassing unit according to any one of preceding claims, further comprising mounting elements (18) and a sealing element (20) configured to mount the rear side (14) of the base body (10) in a substantially fluid tight manner to the degassing opening of the battery housing.

9. The emergency degassing unit according to claim 8, wherein the mounting elements (18) comprises one among thread inserts (44), a bayonet, and snap fits configured to be fixed to a wall of the battery housing.

10. The emergency degassing unit according to claim 8 or 9, wherein the sealing element (20) is a shape gasket (46) or an O-ring.

11. A battery housing, in particular of a traction battery of a motor vehicle, with the battery housing comprising:
the emergency degassing unit (100) according to any one of preceding claims; and
the degassing opening,
wherein the emergency degassing unit (100) is mounted at the degassing opening and is configured to open the passageway (22) when the pressure in the battery housing exceeds a threshold value and to close the passageway (22) when the pressure is below the threshold value.
